Europäisches Patentamt

(19) European Patent Office

Office européen des brevets

(11) Veröffentlichungsnummer : **0 073 512**
**B1**

(12) **EUROPÄISCHE PATENTSCHRIFT**

(45) Veröffentlichungstag der Patentschrift :
30.07.86

(21) Anmeldenummer : **82107971.2**

(22) Anmeldetag : **30.08.82**

(51) Int. Cl.⁴ : **G 01 N 21/07, B 04 B 5/04**

(54) **Vorrichtung und Verfahren zum Steuern und Mischen eines der Zentrifugalkraft ausgesetzten Flüssigkeitsstromes.**

(30) Priorität : **01.09.81 DE 3134560**

(43) Veröffentlichungstag der Anmeldung :
**09.03.83 Patentblatt 83/10**

(45) Bekanntmachung des Hinweises auf die Patenterteilung : **30.07.86 Patentblatt 86/31**

(84) Benannte Vertragsstaaten :
**AT BE CH DE FR GB IT LI LU NL SE**

(56) Entgegenhaltungen :
**DE-A- 3 044 385**
**DE-B- 2 009 993**
**DE-B- 2 022 084**
**DE-B- 2 347 465**
**US-A- 3 555 284**
**US-A- 3 795 451**
**US-A- 4 035 156**
**US-A- 4 284 602**
**Die Akte enthält technische Angaben, die nach dem
Eingang der Anmeldung eingereicht wurden und die
nicht in dieser Patentschrift enthalten sind.**

(73) Patentinhaber : **Boehringer Mannheim GmbH**
**Sandhofer Strasse 116**
**D-6800 Mannheim 31 (DE)**

(72) Erfinder : **Klose, Sigmar, Dr. phil.**
**Breitenloh 7**
**D-8131 Berg-2 (DE)**
Erfinder : **Pasch, Manfred**
**Anton-Bartl-Strasse 7**
**D-8132 Tutzing (DE)**
Erfinder : **Kleemann, Wolfgang, Dr.**
**Gröberweg 3**
**D-8132 Tutzing (DE)**
Erfinder : **Vieth, Friedhelm**
**Hauptstrasse 11**
**D-8121 Haunshofen (DE)**
Erfinder : **Buschek, Herbert**
**Paradeisstrasse 36**
**D-8120 Weilheim (DE)**

EP 0 073 512 B1

Jouve, 18, rue St-Denis, 75001 Paris, France

**Beschreibung**

Die Erfindung betrifft eine Vorrichtung zum Steuern und Mischen eines dem Einfluß der Zentrifugalkraft in einem um eine Achse rotierenden Element, insbesondere dem Rotor eines Zentrifugalanalysators ausgesetzten Flüssigkeitsstromes, wobei die zu steuernde Flüssigkeitsmenge in einem Strömungskanal bewegt wird und ein begrenztes Volumen hat sowie ein Verfahren zum Betreiben einer derartigen Vorrichtung.

Die Erfindung ist insbesondere zur Verwendung in Zentrifugalanalysatoren geeignet, wie sie seit einer Reihe von Jahren für Zwecke der chemischen Analyse, insbesondere in der klinischen Chemie, gebräuchlich sind. Derartige Analysatoren zeichnen sich besonders durch ihren relativ einfachen mechanischen Aufbau und demzufolge große Zuverlässigkeit aus. Sie haben im allgemeinen kreissymetrisch aufgebaute Rotoren mit einer Mehrzahl von radial verlaufenden Strömungskanälen, die mehrere Kammern verbinden. Jeder Strömungskanal weist von innen nach außen üblicherweise einen muldenförmig ausgebildeten Reagenzraum, einen Probenraum und einen Meßaum auf, der bei den bekannten Einrichtungen als optische Küvette ausgebildet ist. Üblicherweise werden der Reagenzraum und der Probenraum bei stehendem Rotor mit flüssigem Reagenz beziehungsweise der zu untersuchenden flüssigen Probe (meist Serum oder Plasma des Blutes) gefüllt. Danach wird der Rotor in verhältnismäßig schnelle Umdrehung (größenordnungsmäßig 1 000 Umdrehungen/Minute) versetzt, so daß das Reagenz von der Zentrifugalkraft durch den Strömungskanal in die Probenkammer und Probe und Reagenz gemeinsam durch die Fortsetzung des Strömungskanals in die optische Küvette getrieben werden. Während der Rotation des Rotors wird dann die optische Absorption des Reaktionsgemisches in den verschiedenen Küvetten mit Hilfe geeigneter Detektoren und einer die Synchronisation des Rotorlaufs und der Auswerteeinrichtungen ermöglichenden elektronischen Schaltung gemessen. Ein besonderer Vorteil der Zentrifugalanalysatoren besteht hierbei darin, daß der Reaktionsverlauf in allen Küvetten des Rotors praktisch gleichzeitig verfolgt werden kann und dadurch eine besonders genaue Auswertung insbesondere dann möglich ist, wenn die Kinetik der reaktion die gewünschte Aussage über einen bestimmten Bestandteil der Probenflüssigkeit gibt. Das Prinzip des Zentrifugalanalysators ist aus zahlreichen Publikationen bekannt, so daß hier nicht weiter darauf eingegangen werden soll.

Ein Nachteil der bekannten Zentrifugalanalysatoren besteht darin, daß sie nur relativ einfache Reaktionsabläufe erlauben. Wie beschrieben, werden eine oder in Ausnahmefällen auch mehrere Reagenzflüssigkeiten in einem Arbeitsgang mit der Probe vermischt und durch Zentrifugalkraft in die Küvette transportiert. Die Reaktion muß deswegen notwendigerweise einstufig sein, das heißt es gibt insbesondere kein Möglichkeit, zunächst eine Vorreaktion mit einem ersten Reagenz ablaufen zu lassen und dann, gegebenenfalls nach einer entsprechenden Inkubationszeit, eine zweite reaktion mit einem weiteren Reagenz durchzuführen. Derartige zweistufige Reaktionen sind aber insbesondere in der klinischen Analytik von erheblicher bedeutung. In der DE-PS 20 09 993 ist im Zusammenhang mit einer anderen Aufgabenstellung eine Einrichtung beschrieben, die eine Steuerung, das heißt ein Unterbrechen, gezieltes Freigeben und Umlenken einer Flüssigkeitsströmung in einer Einrichtung der eingangs erwähnten Art erlaubt. Bei dieser bekannten Vorrichtung sind im Strömungskanal der Flüssigkeit Hohlräume vorgesehen, die jeweils durch einen siphonartigen Kanal mit dem anschließenden Hohlraum verbunden sind. Derjenige Teil des Siphon, der der Rotationsachse am nächsten liegt, ist dieser näher als der Flüssigkeitsspiegel in dem Hohlraum bei der Rotation des Rotors. Dadurch wird zunächst nur der Hohlraum und der anschließende Teil des siphonförmigen Kanals mit Flüssigkeit gefüllt. Das Weiterströmen der Flüssigkeit aus dem Hohlraum in die sich an den Siphon anschließende Kammer wird dadurch bewerkstelligt, daß ein entsprechender Gasdruck an den Hohlraum angelegt wird, der die Flüssigkeit durch den Siphon treibt. Die Zuführung des notwendigen Druckgases zu dem Rotor kann nur in dessen Zentrum erfolgen und ist notwendigerweise aufwendig in der Konstruktion. Sie erfordert eine spezielle Rotorgestaltung, durch die der Konstruktion des Rotors in anderer Hinsicht unerwünschte Beschränkungen auferlegt werden.

Aus der DE-OS 20 22 084 ist eine Vorrichtung bekannt, bei der eine Flüssigkeit, insbesondere eine Probenflüssigkeit, wie zum Beispiel Blut, zum Zwecke des Abzentrifugierens von festen bestandteilen in entsprechende Kammern geschleudert wird, aus denen sie beim Anhalten des Rotors aufgrund der Schwerkraft in zentripetal schräg nach unten führende Kanäle abfließt. Diese Einrichtung hat einen erheblichen Platzbedarf und birgt, wollte man sie zum Steuern des Flüssigkeitsstroms verwenden, das Risiko, daß ein Teil der Flüssigkeit unkontrolliert durch die relativ großen Kanäle weiterströmt.

Ein anderes Problem der bekannten Zentrifugalanalysatoren bezieht sich auf die Durchmischung der Flüssigkeit. Es ist für die Analyse sehr wesentlich, daß Reagenz und Probe in kurzer Zeit und möglichst vollständig durchmischt werden, bevor sie in die Meßküvetten gelangen. Zur Erreichung dieses Zieles sind bereits eine Vielzahl von Verbesserungen an Zentrifugalanalysatoren vorgeschlagen worden, beispielsweise die Verwendung verschieden geformter Strömungshindernisse, die die Vermischung der sie durchströmenden Flüssigkeit verbessern sollen. Eine andere bekannte Vorrichtung zum Mischen von Probe und Reagenz in einem Zentrifugalanalysator ist der US-PS 3 795 451 zu entnehmen. Deren Rotor weist eine Probenkammer auf, die durch eine senkrechte Wand von der radial auswärts liegenden Meßküvette getrennt ist.

Am oberen Ende der Trennwand ist ein Durchlaß von der Größe einer Kapillare vorgesehen. Radial innen von der Probenkammer liegt eine Reagenzkammer, wobei die trennwand zwischen diesen schräg nach unten geneigt ist und an ihrem Unterende einen Durchlaß von der Abmessung einer kapillare aufweist. Im Betrieb wird zunächst das Reagenz bei einer niedrigen Rotordrehzahl in die Probenkammer getrieben, die gleichzeitig als Mischkammer dient. Nach einer vorgegebenen Zeit wird die Drehzahl erhöht, wodurch die Reaktionslösung aus der Probenkammer in die Küvette getrieben wird. Mit einer derartigen Einrichtung, bei der die Verbindungskapillare zwischen Reagenzkammer und Probenkammer einerseits und zwischen Probenkammer und Küvette andererseits jeweils an der zentrifugal außen liegenden Wand der Kammern angeordnet ist und ausschließlich in Richtung der Zentrifugalkraft verläuft, wird zwar möglicherweise die Durchmischung von Reagenz und Probe in der Probenkammer verbessert, ein gleichzeitiges Steuern des Reaktionsablaufes in dem zuvor angesprochenen Sinne zur Erreichung einer möglichst vielfältigen Behandlung der Reaktionslösung, wird bei dieser vorbekannten Vorrichtung jedoch nicht erreicht (und in der Druckschrift auch nicht angestrebt).

Der vorliegenden Erfindung liegt die Aufgabe zugrunde, ein Steuern, das heißt Umlenken, Unterbrechen und Freigeben eines volumenmäßig beschränkten Flüssigkeitsstromes und gleichzeitig ein Durchmischen der Flüssigkeit in einem rotierenden Element zu erreichen, wobei die entsprechende Vorrichtung zuverlässig und ohne bewegliche Teile arbeiten und auf engem Raum zu realisieren sein soll.

Diese Aufgabe wird bei einer Vorrichtung der eingangs bezeichneten Art dadurch gelöst, daß im Strömungskanal für die Flüssigkeit eine nach radial außen geschlossene Staukammer vorgesehen ist, deren Rauminhalt größer ist als das maximale Flüssigkeitsvolumen und die so geformt ist, daß die Flüssigkeit bei einer Rotation des Elements mit einer hinreichend hohen ersten Drehzahl in ihr verbleibt und mit der Staukammer ein Auslaufkanal in Verbindung steht, der so geführt und angeordnet ist, daß mindestens ein Teil davon radial näher zur Rotationsachse als die Flüssigkeitsoberfläche während der Rotation mit der ersten Drehzahl liegt, dessen Wände aus einem von der Flüssigkeit benetzbaren Material bestehen und dessen Querschnitt so gestaltet ist, daß die Flüssigkeit bei einer zweiten Drehzahl, die kleiner ist als die erste Drehzahl, durch eine Grenzflächenkraft getrieben in den Auslaufkanal eindringt. Beim vorliegenden Verfahren wird die Flüssigkeit mit einer Drehzahl, die in einer Zentrifugalbeschleunigung resultiert, die größer ist als die Gravitationsbeschleunigung, in den Stauraum getrieben und nach Ablauf der gewünschten Aufenthaltsdauer in dem Strauraum die Drehzahl soweit senkt, daß die Flüssigkeit den mit dem Stauraum verbundenen Auslaufkanal, durch Kapillarkraft getrieben, füllt.

Im Gegensatz zu der zuvor erwähnten bekannten Vorrichtung, zeichnet sich also die Erfindung dadurch aus, daß eine Staukammer vorgesehen ist, deren Auslaufkanal nicht unmittelbar radial nach außen mit der nächsten Kammer verbunden ist, sondern zumindest teilweise radial näher zur Rotationsachse liegt als die Flüssigkeitsoberfläche, die sich während der Rotation mit einer hinreichend hohen ersten Drehzahl in der Staukammer ausbildet. Gemäß dem erfindungsgemäßen Verfahren soll diese erste Drehzahl mindestens etwa so hoch sein, daß die daraus resultierende Zentrifugalbeschleunigung in der Staukammer etwa der Gravitationsbeschleunigung entspricht. In diesem Fall erhält die Flüssigkeit einen nach unten und innen geneigten Meniskus, verbleibt aber während der rotation mit der ersten Drehzahl in der Staukammer und gegebenenfalls, ähnlich wie bei der zuvor erwähnten siphonartigen Konstruktion, einem Teil des Auslaufkanals.

Im Gegensatz zu der in der US-PS 3 795 451 beschriebenen Vorrichtung wird das Weiterströmen der Flüssigkeit nicht durch eine Erhöhung der Drehzahl, sondern durch eine Senkung der Drehzahl erreicht. Im Zusammenhang damit ist wichtig, daß der Auslaufkanal der Straukammer aus einem von der Flüssigkeit benetzbaren Material besteht. In diesem Fall sind die Adhäsionskräfte, die zwischen der Wand des Kanals und der Flüssigkeit wirken, größer als die Kohäsionskräfte zwischen den Flüssigkeitsteilchen und infolgedessen hat die Flüssigkeit das Bestrehen, die sie begrenzende Wand zu benetzen. Man spricht in diesem Fall auch von einer positiven Grenzflächenenergie, die zu einer entsprechenden Grenzflächenkraft führt. Der Auslaufkanal ist in seinem Querschnitt so gestaltet, daß diese Grenzflächenkraft oder Kapillarkraft die Flüssigkeit bei Abwesenheit anderer Kräfte und gegebenenfalls auch ohne Unterstützung durch die Schwerkraft in den Auslaufkanal ansaugt.

Um eine Saugwirkung entfalten zu können, muß der Auslaufkanal kapillaraktiv gestaltet sein.

Besonders bevorzugt ist eine längliche, beispielsweise rechteckförmige Querschnittsgestaltung des Auslaufkanals, bei der die kleinere Dimension des Rechteckes so klein ist, daß eine Saugwirkung in dem gewünschten Ausmaß erreicht wird, während die längere Dimension des Querschnittsrechteckes so bemessen ist, daß insgesamt die für die gewünschte Strömung notwendige Querschnittsfläche resultiert.

Gemäß dem erfindungsgemäßen Verfahrensvorschlag tritt die Flüssigkeit, wie erwähnt, bei einer Senkung der Drehzahl in den Auslaufkanal ein und füllt diesen. Durch geeignete, im folgenden noch mehr im einzelnen beschriebene Maßnahmen, kann sie dann aus dem Auslaufkanal in einen entsprechenden Aufnahmeraum weitertransportiert werden, so daß die gewünschte Steuerung der Flüssigkeit allein durch eine entsprechende Variation der Drehzahl erreicht wird. Überraschenderweise führt die enge, kapillarförmige Gestaltung des Auslaufkanals nicht zu einer Sperrwirkung, die erst durch eine Erhöhung der Drehzahl überwunden werden müßte, sondern die Kapillarkraft läßt sich mit Hilfe der erfindungsgemäßen konstruktiven Maßnahmen vorteilhaft nutzen, um ein Weiterleiten der Flüssigkeit auch ohne Unterstützung anderer Kräfte, insbesondere der Schwerkraft oder eines entsprechenden Gasdrucke zu erreichen. Gleichzeitig werden mehrere in die Staukammer zugeführte flüssige Komponenten intensiv und schnell durchmischt. Es is wohl als unerwartet anzusehen, daß eine derartige, insbesondere in einem Zentrifugalanalysator auf engem Raum unterzubringende und mit sehr kleinen Querschnittsdimensionen arbeitende Vorrichtung sehr zuverlässig funktioniert, wie praktische Erfahrungen mit der erfindungsgemäßen Vorrichtung zeigen.

Die Erfindung wird im folgenden anhand eines in der Zeichnung dargestellten Ausführungsbeispiels näher erläutert, wobei auch auf bevorzugte Ausführungsformen der Erfindung und die damit verbundenen Vorteile eingegangen wird.

Es zeigen :

Figur 1 eine schematische Darstellung des Rotors eines Zentrifugalanalysators mit einem darauf befindlichen Einsatzelement, das den Strömungskanal für die Flüssigkeit enthält.

Figur 2a und 2b den Querschnitt von der Seite und die Aufsicht eines entsprechenden Einsatzelementes, das die erfindungsgemäße Vorrichtung aufweist.

Figur 3 eine Detailansicht einer erfindungsgemäßen Steuer- und Mischvorrichtung in einem Einsatzelement gemäß Figur 2.

Figur 4 einen Querschnitt entlang der Linie IV - IV in Figur 3 und

Figur 5 a bis d eine der Figur 3 entsprechende Darstellung, aus der der Funktionsablauf der erfindungsgemäßen Vorrichtung zu ersehen ist.

Die Erfindung wird im folgenden anhand eines speziell gestalteten Rotors eines Zentrifugalanalysators erläutert, der sich insbesondere dadurch auszeichnet, daß die Probenkammer und die Meßküvette sowie der beide verbindende Strömungskanal sich in einem von der Basis des Rotors getrennten Einsatzelement befinden, in dem die notwendigen Reagenzien auf einem Trägermaterial, beispielsweise in Form von Reagenzpapieren untergebracht sind. Es sei jedoch betont, daß die Erfindung auf jedes rotierende Element, in dem ein begrenztes Flüssigkeitsvolumen im beschriebenen Sinne gesteuert und gemischt werden soll, anwendbar ist. Dies gilt insbesondere für Rotoren von Zentrifugalanalysatoren unabhängig davon, ob sie einstückig oder aus mehreren Teilen hergestellt sind und ob die Reagenzien als Flüssigkeiten in den Rotor eingefüllt werden oder in fester Form darin vorhanden sind.

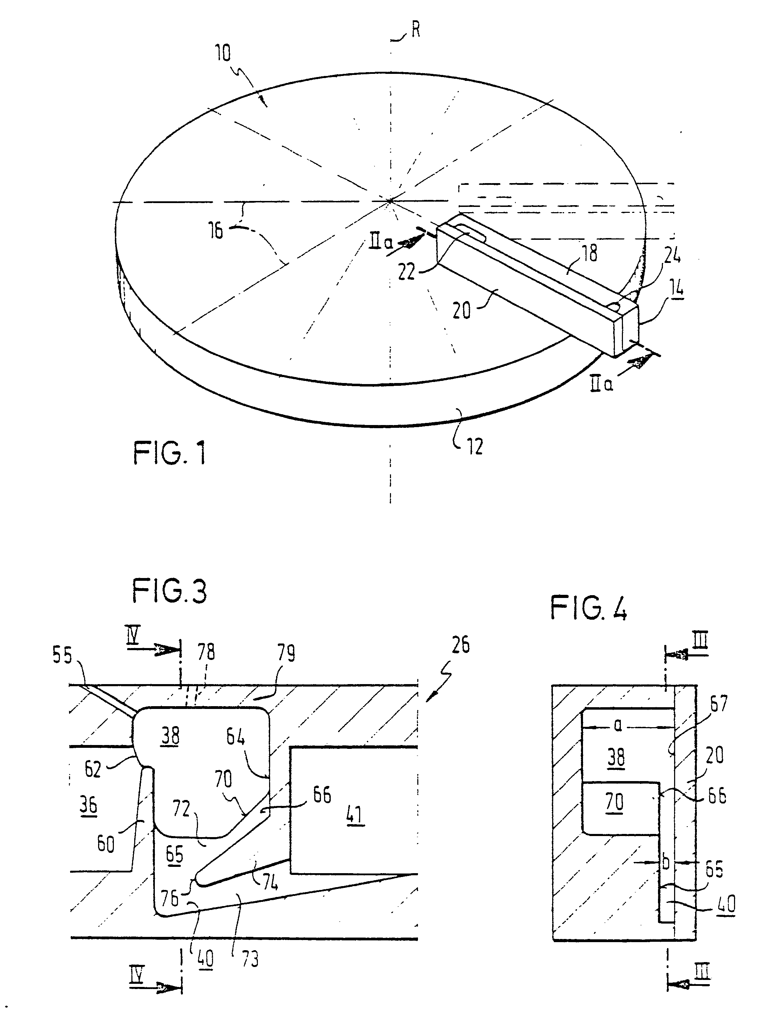

In Figur 1 erkennt man einen in seiner Gesamtheit mit dem Bezugzeichen 10 bezeichneten Rotor eines Zentrifugalanalysators, der sich um eine Rotationsachse R drehen kann. Er ist stark vereinfacht dargestellt und besteht im wesentlichen aus einer Rotorbasis 12, auf dem mehrere Einsatzelemente 14 in verschiedenen Positionen befestigt werden können, wobei in der Figur der Übersichtlichkeit halber nur ein Einsatzelement 14 dargestellt und ein weiteres in strichpunktierten Linien angedeutet ist. Die Einsatzelemente 14 erstrecken sich im wesentlichen in radialer Richtung entlang den strichpunktierten Linien 16. Sie bestehen jeweils im wesentlichen aus einem Grundkörper 18 und einem Deckelteil 20. In Figur 1 erkennt man die Probenkammeröffnung 22 und das Küvettenfenster 24.

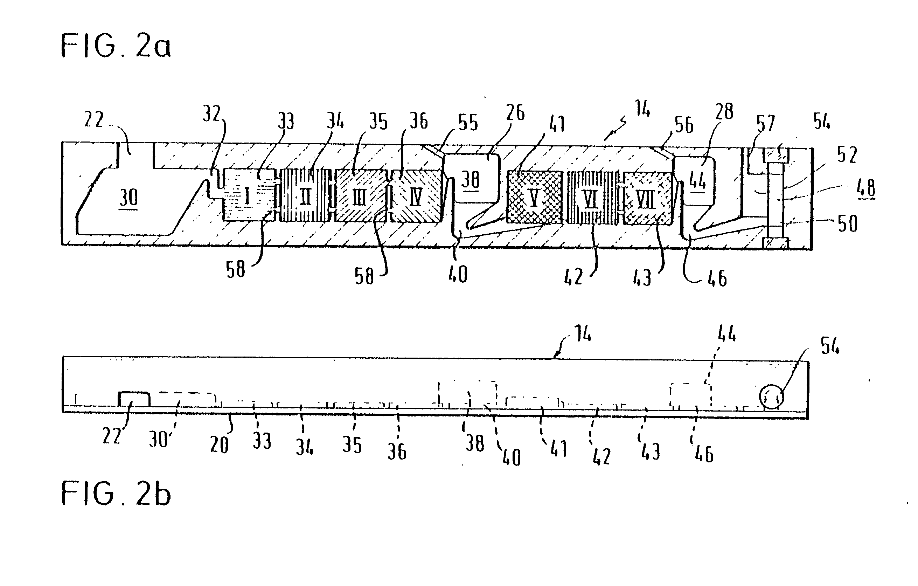

Figur 2 zeigt Einzelheiten eines Einsatzelementes 14, das mit zwei erfindungsgemäßen Steuer- und Mischvorrichtungen 26 und 28 versehen ist, die im folgenden einfachheitshalber als Mischventile bezeichnet werden. Der Strömungskanal für die Flüssigkeit in dem Einsatzelement geht aus von einer Probenkammer 30 durch einen Verbindungskanal 32 und 4 Reagenzfelder 33 bis 36 in die Staukammer 38 des ersten Mischventils 26. Aufgrund der im folgenden näher beschriebenen Funktionsweise des Mischventils 26, gelangt die Flüssigkeit im Strömungskanal weiter durch den Auslaufkanal 40 in drei weitere Reaktionsfelder 41, 42 und 43. Von dort gelangt sie in die Staukammer 44 und, gezielt gesteuert aufgrund der Funktion des Mischventils 28, in den Auslaufkanal 46 und von dort in die Küvette 48, die aus dem eigentlichen Meßraum 50 und einem Küvettenvorraum 52 besteht. Sie ist nach oben und unten mit durchsichtigen Küvettenfenstern 54 versehen. Die beiden Mischventile 26 und 28, sowie der Küttenvorraum 52 sind mit Entlüftungskanälen 55, 56 und 57 versehen. Das Einsatzelement 14 ist auf dem Rotor so eingebaut, daß es im wesentlichen radial von innen nach außen angeordnet ist, wobei die Probenkammer am nächsten zum Zentrum liegt.

Die « Reagenzfelder » 33 bis 36 und 41 bis 43 sind jeweils durch Überströmkanäle 58 miteinander verbunden und können verschiedene Funktionen erfüllen und in verschiedenerlei Weise gestaltet sein. Bevorzugt enthalten die Felder 33 bis 36 eines oder mehrere Papiere, die mit getrockneten Reagenzien versehen sind. Das Reagenzfeld 41 ist im Zusammenhang mit der Funktion des erfindungsgemäßen Mischventils 26 bevorzugt tiefer ausgebildet, wie insbesondere aus der Aufsicht auf das Einsatzelement gemäß Figur 2b zu ersehen ist. Je nach dem durchzuführenden Analyseverfahren kann es zweckmäßig sein, wenn dieses Reagenzfeld lediglich ein Saugvlies als kapillaraktiv wirkende Füllung enthält, das kein Reagenz trägt. In anderen Fällen wird aber auch dieses Vlies als Reagenzträger benutzt. Die Reagenzfelder 42 und 43 erfüllen wieder ähnliche Zwecke wie die Reagenzfelder 33 bis 36, enthalten aber Reagenzien für eine zweite Verfahrensstufe des mit dem Einsatzelement 14 duchrzuführenden Analyseverfahren.

Im Betrieb wird eine in geeigneter Weise verdünnte zu analysierende Probe durch die Öffnung 22 in die Probenkammer 30 bei stehendem
Rotor eingefüllt. Danach wird der Rotor in Drehung versetzt, so daß die Probenlösung aus der
Probenkammer in das erste Reagenzfeld 33 und
durch die weiteren Reagenzfelder 34 bis 36 in das
erste Mischventil 26 gelangt. Beim Durchströmen
der Reagenzfelder werden die in diesen enthaltenen Reagenzien aufgelöst und gelangen mit der
Probenlösung in das Mischventil 26. Die Funktionsweise der in den Reagenzfeldern enthaltenen Reagenzträger und der Vorgang des Auflösens der Reagenzien ist in der DE-OS 30 44 385
näher beschrieben, auf die hier Bezug genommen wird. Aus dem ersten Satz Reagenzfeldern gelangt die Flüssigkeit, wie erwähnt, in
die Staukammer 38 des Michventils 26, wo sie
solange verbleibt, wie eine hinreichend hohe
Drehzahl des Rotors 10 aufrechterhalten wirdk.
Diese Zeit bestimmt sich insbesondere nach der
für die erste Verfahrensstufe notwendigen Inkubationszeit des Reaktionsgemisches.

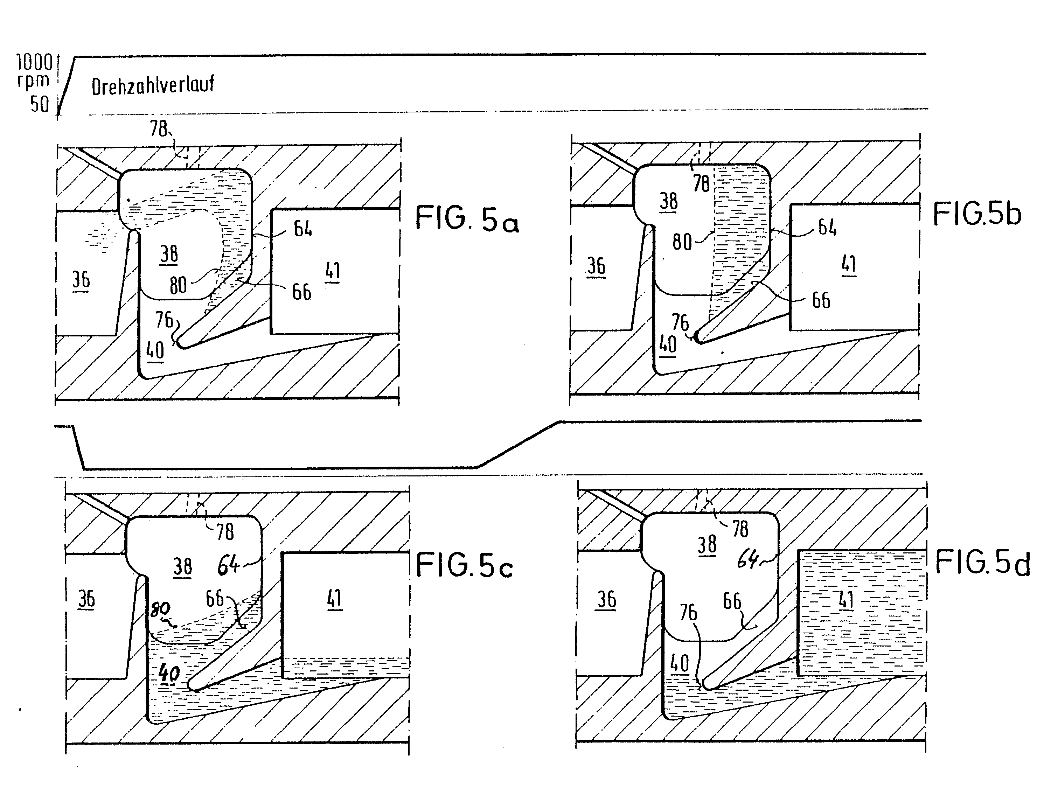

Aufbau und Funktion des Mischventils 26
werden im folgenden anhand der Figuren 3 bis 5
näher beschrieben.

Figur 3 zeigt einen vergrößerten Ausschnitt der
Querschnittsdarstellung gemäß Figur 2. Man erkennt das staukammerseitige Ende des Reagenzfeldes 36, das mit einer Trennwand 60 abgeschlossen ist, die auf der Seite des Reagenzfeldes
schräg von radial einwärts unten nach radial
auswärts oben geneigt ist. Oberhalb der Trennwand befindet sich die Einlauföffnung 62 der
Staukammer 38.

Die Staukammer 38 ist in der dargestellten
Ausführungsform derart ausgebildet, daß sie in
zentrifugaler Richtung, also in Figur 3 nach
rechts vollständig geschlossen ist. Der radial
äußerste Teil der Staukammer wird als Staukammerboden 64 bezeichnet.

Aus der Staukammer heraus führt der Auslaufkanal 40, der, wie aus dem Querschnitt nach
Figur 4 deutlich zu ersehen ist, einen länglichen,
im wesentlichen rechteckigen Querschnitt aufweist. Aus den Figur 3 und 4 ist deutlich zu
ersehen, daß die eigentliche Staukammer 38 sehr
viel tiefer (Distanz a) ausgebildet ist, das heißt in
der Querschnittsdarstellung nach Figur 4 sehr
viel breiter ist, als der Ausfaufkanal 40. Die Fläche
65 begrenzt den Auslaufkanal zusammen mit der
Innenfläche 67 des Deckels 20 auf eine Breite b.
Die Fläche 65 erstreckt sich mit ihrem Bereich 66
in die Staukammer 38. In den Figuren erkennt
man die Fläche 70, die auf der radial äußeren
Seite der Staukammer 38 durch den Übergang
von der großen Tiefe a der Staukammer auf die
geringe Tiefe b des Auslaufkanals 70 entsteht.

In radialer Richtung betrachtet, also in der
Zeichenebene von Figur 3, verläuft der Auslaufkanal 40 in einem ersten Abschnitt 72 nach radial
innen und unten, also mit einer Richtungskomponente auf die Rotationsachse R zu. In dem zweiten Abschnitt 73 dagegen verläuft der Auslaufkanal mit einer Richtungskomponente radial von
der Rotationsachse weg. Beide Abschnitte
werden durch die Stauwand 74 getrennt. Der am
nächsten zur Rotationsachse R liegende Teil der
Stauwand 74 wird als Scheitelpunkt 76 bezeichnet. Der zweite Abschnitt des Auslaufkanals
mündet in zentrifugaler Richtung in einen Aufnahmeraum, der bei dem hier dargestellten
Mischventil 26 durch das Reagenzfeld 41 gebildet
wird. Der Auslaufkanal 46 des Mischventils 28
mündet in den Küttenvorraum 52 (Figur 2). Wesentlich ist, daß das Ende des Auslaufkanals, das
heißt seine Mündung in den sich anschließenden
Aufnahmeraum 41 beziehungsweise 52 weiter
weg von der Rotationsachse liegt, als der radial
äußerste Teil der Staukammer.

In Figur 3 erkennt man schließlich noch einen
Überlaufkanal 78 in der oberen Wand 79 der
Staukammer 38, durch den bei der ersten
Drehzahl ein einen bestimmten Grenzwert übersteigendes Flüssigkeitsvolumen abfließen kann.
Dieser Überlaufkanal 78 ist nur dann notwendig,
wenn die Staukammer 38 in an sich bekannter
Weise gleichzeitig zur Begrenzung des aus dem
Mischventil 26 weitergeleiteten Volumenstroms
verwendet werden soll. Er ist daher in der Zeichnung gestrichelt dargestellt.

Die Funktionsweise der erfindungsgemäßen
Steuer- und Mischvorrichtung wird im folgenden
anhand der in den Figuren 5a bis 5d dargestellten
Verfahrensschritte näher beschrieben. Über den
Figuren befindet sich ein Diagramm für den
Drehzahlverlauf des Analysatorrotors, durch das
das verwendete Drehzahlprogramm verdeutlicht
wird.

Figur 5a zeigt das Stadium, bei dem die
Flüssigkeit aus dem letzten Reagenzfeld 36 der
ersten Stufe mit einer hinreichend hohen
Drehzahl (im Beispiel 1000 Umdrehungen/Minute) herausgeschleudert wird und in die Staukammer 38 gelangt. Diese Drehzahl muß so hoch
bemessen sein, daß die Flüssigkeit durch Zentrifugalkraft gegen den Staukammerboden 64
gedrückt wirdk. Je nach der Relation zwischen
der auf die Flüssigkeit wirkenden Zentrifugalkraft
einerseits und der Schwerkraft andererseits,
bildet sich eine mehr oder weniger stark
gekrümmte und geneigte Flüssigkeitsoberfläche
80. Die Drehzahl muß dabei so hoch bemessen
sein, daß die Flüssigkeit im Kräftespiel zwischen
der Zentrifugalkraft und der ihr in dem ersten
Abschnitt 72 des Auslaufkanals entgegenwirkenden Kapillarkraft noch nicht weiter als
maximal bis zu dem Scheitelpunkt 76 in den
Auslaufkanal eindringt.

Figur 5b zeigt den Zustand während der Rotation mit der ersten Drehzahl. Man erkennt aus
dieser Figur auch die Funktion des fakultativ
vorgesehenen Überlaufkanals 78, der sich an der
Stelle befindet, an der die Flüssigkeitsoberfläche
80 bei der entsprechenden Drehzahl und dem
gewünschten maximalen Volumen endet.

Figur 5c zeigt das Auslaufen der Flüssigkeit
durch den Auslaufkanal 40. Wie aus dem Drehzahldiagramm über der Figur zu ersehen ist, wurde die Drehzahl erheblich vermindert, beispielsweise auf ca. 50 Umdrehungen/Minute. Die Oberfläche 80 wird dadurch sehr viel weniger steil, weil die Zentrifugalkraft bei dieser geringen Drehzahl weniger stark ist als die Schwerkraft. Nun überwiegt in dem ersten Abschnitt 72 des Auslaufkanals 40, der im wesentlichen entgegen der Zentrifugalrichtung verläuft, die Kapillarkraft gegenüber der Zentrifugalkraft. Im zweiten Abschnitt 73 des Auslaufkanals wirken beide Kräfte in der gleichen Richtung, weil dieser eine Richtungskomponente in Zentrifugationsrichtung hat. Dadurch füllt sich, wie aus Figur 5c zu ersehen ist, der Auslaufkanal aufgrund der Kapillarkraft mit Flüssigkeit.

In Figur 5d ist ein Verfahrensstadium dargestellt, bei dem die Drehzahl langsam wieder erhöht wurde. Dies darf erst geschehen, wenn die Flüssigkeit im Auslaufkanal einen Punkt erreicht hat, der weiter weg von der Rotationsachse liegt als der Staukammerboden 64. Wenn in diesem Zustand (wie beispielsweise in Figur 5c dargestellt) die Drehzahl langsam wieder erhöht wird, wirken auf die Flüssigkeitsteilchen in dem von der Staukammer 38 abgewandten Teil des Auslaufkanals 40 in dem Zentrifugations-Kraftfeld stärkere Kräfte als auf die im staukammerseitigen Teil des Auslaufkanals 40 befindlichen Wasserteilchen der Flüssigkeit. Dieser Effekt ist vergleichbar dem Wirkprinzip eines im chemischen Labor gebräuchlichen Saughebers im Schwerefeld. Bei der langsamen Beschleunigung des Rotors wird dadurch die Flüssigkeit in den Aufnahmeraum 41 beziehungsweise 52 getrieben. In Figur 5d ist der Zustand dargestellt, bei dem die gesamte Flüssigkeit den Scheitelpunkt 76 gerade überwunden hat und wieder auf die volle erste Drehzahl beschleunigt werden kann.

Die Staukammer 38 kann in verschiedenerlei Weise gestaltet sein, wobei die für den Einzelfall sinnvollste Gestaltung durch Versuche bestimmt werden kann. Jedenfalls muß ihr Fassungsvermögen bei der ersten Drehzahl größer sein als das maximale Volumen der Flüssigkeit. Für den erfindungsgemäßen Effekt ist es günstig, wenn die Staubkammer 38 eine im Verhältnis zum Volumen relativ kleine benetzte Oberfläche aufweist. Da sie nämlich aus praktischen Gründen bevorzugt aus dem gleichen Material wie der Auslaufkanal besteht, wird auch ihre Oberfläche von der Flüssigkeit benetzt. Dieser effekt würde bei einer zu engen Gestaltung der Staukammer 38 der gewünschten Kapillarwirkung des Auslaufkanals 40 entgegenwirken.

Der Auslaufkanal 40 selbst kann im Rahmen der vorliegenden Erfindung ebenfalls stark variiert werden. Die gewünschte Kapillarwirkung kann statt der in den Figuren dargestellten rechteckigen Querschnittsgestaltung auch durch eine entsprechende Faserfüllung oder beispielsweise durch ein Nutenprofil realisiert sein. In jedem Fall wird die Kraft, mit der die Flüssigkeit in den Kapillarspalt des Auslaufkanals 40 gesogen wird, einerseits durch die Benetzungseigenschaften des Materials und andererseits durch die charakteristische Breite b des Kapillarspaltes bestimmt. Im Einzelfall läßt sich die optimale Relation von Kapillarspaltquerschnitt, insbesondere der charakteristischen Breite b, verwendetem Material und Verlauf des Auslaufkanals 40 durch Versuche bestimmen.

Die in den Figuren dargestellt Gestaltung des Auslaufkanals 40, bie der dieser in seinem durch den Bereich 66 der Fläche 65 definierten Bereich bereits während der Rotation mit der ersten Drehzahl zwangsweise benetzt wird, ist besonders bevorzugt, da die Zuverlässigkeit der erfindugsgemäßen Einrichtung dadurch erhöht wird.

Andererseits sind aber auch Anwendungsfälle denkbar, bei denen diese Maßnahme nicht notwendig oder zweckmäßig ist und der Auslaufkanal an einer Stelle in die Staukammer mündet, die bei Rotation mit der ersten Drehzahl nicht von der Flüssigkeit benetzt wird.

Bevorzugt ist der Aufnahmeraum 41 mit einer kapillaraktiven Füllung oder Gestaltung versehen. Das heißt es ist beispielsweise ein Vlies vorhanden, durch das die Flüssigkeit, wenn sie den Auflaufkanal vollständig gefüllt hat, in den Aufnahmeraum angesaugt wird. Bei dieser Ausführungsform der Erfindung ist es nicht notwendig, daß der Auslaufkanal 40 in seinem zweiten Abschnitt 73 in zentrifugaler Richtung verläuft. Er könnte beispielsweise auch von der Staukammer 38 aus unmittelbar senkrecht nach unten verlaufen, so daß beim Absenken der Drehzahl die Flüssigkeit nur noch durch Kapillarkraft und nicht, wie zuvor beschrieben, durch eine zusätzliche Zentrifugalwirkung in den Aufnahmeraum 41 gefördert wird.

In einer praktisch bewährten Ausführungsform der Erfindung wird Polymethylmetacrylat als Material für das Einsatzelement verwendet, das die notwendigen Benetzungseigenschaften gegenüber den in der klinischen Analytik üblichen Flüssigkeiten hat. Soll das Einsatzelement als Kuntstoffspritzteil in großen Zahlen hergestellt werden, so ist insbesondere Polystyrol als Material geeignet.

Bei einer Ausführungsform der Erfindung, bei der die von dem Mischventil 26 aufzunehmende Flüssigkeitsmenge 40 bis 45 $\mu$l beträgt, hat sich in praktischen Versuchen ein Auslaufkanal mit einer charakteristischen Breite zwischen 0,2 und 1 mm, bevorzugt 0,5 mm bewährt, wobei die Längsdimension des Querschnitts ca. 2 bis 4 mm betrug.

Überraschenderweise erlauben die beschriebenen erfindungsgemäßen Mischventile 26 und 28 nicht nur das Steuern des Flüssigkeitsstroms insbesondere bei mehrstufigen analytischen Verfahren, sondern es wird zugleich eine sehr gute Durchmischung der Flüssigkeit erzielt. Dieser zunächst unerwartete Effekt der erfindungsgemäßen Konstruktion läßt sich wohl so erklären, daß sich in der Staukammer 38 zunächst Schichten verschiedener Konzentration bilden, die sich nur relativ langsam durchmischen. Beim Ab-

senken der Drehzahl treten diese Schichten dann wohl im wesentlichen parallel in den Auslaufkanal 40 ein. Dort werden sie während des Auslaufens gemischt.

Nachdem die zu untersuchende Flüssigkeit in dem Einsatzelement 14 in der zuvor geschilderten Weise das Mischventil 26 durch Absenken und Wiedererhöhen der Drehzahl durchlaufen hat, gelangt sie, wie beschrieben, in das Reagenzfeld 41, das als Aufnahmekammer fungiert. Wie aus Figur 2b zu ersehen ist, ist dieses Reagenzfeld bevorzugt tiefer ausgeführt als die anderen Reagenzfelder, so daß das gesamte Flüssigkeitsvolumen in diesem Reagenzfeld aufgenommen werden kann.

Von dort gelangt sie bei weiter erhöhter Drehzahl durch die gegebenenfalls mit entsprechenden Trockenreagenzien oder anderen in der DE-OS 30 44 385 beschriebenen Einrichtungen gefüllten Reagenzfelder 42 und 43 in das zweite Mischventil 28. In diesem Mischventil bleibt die Flüssigkeit, wie im ersten Mischventil 26, solange die erste höhere Drehzahl aufrecht erhalten wird. Wenn die gegebenenfalls gewünschte zweite Inkubationszeit abgelaufen ist, wird, genau wie zuvor beschrieben, die Drehzahl abgesenkt und nach Füllung der Auslaufkapillare 46 wieder erhöht, so daß die Flüssigkeit aufgrund der erfindungsgemäßen Wirkungsweise des Michventils 28 in den Küttenvorraum 52 und von dort in den Meßraum 50 eindringt. Das zweite Mischventil wird zweckmäßigerweise auch dann vorgesehen, wenn vom Reaktionsablauf her keine zweite Inkubationszeit notwendig ist, weil auch in diesem Falle die erfindungsgemäße Vorrichtung eine besonders intensive und schnelle Homogenisierung der in die Staukammer 44 zugeführten Flüssigkeit bewirkt.

## Patentansprüche

1. Vorrichtung zum Steuern und Mischen eines dem Einfluß der Zentrifugalkraft in einem um eine Achse rotierenden Element, insbesondere dem Rotor (10) eines Zentrifuglanalysators ausgezetzten Flüssigkeitsstroms, wobei die zu steuernde Flüssigkeitsmenge sich in einem Strömungskanal bewegt und ein begrenztes Volumen hat, wobei im Strömungskanal (22, 32-36, 48) für die Flüssigkeit mindestens eine Staukammer (38) vorgesehen ist, deren Rauminhalt größer ist als das maximale Flüssigkeitsvolumen und die so geformt ist, daß die Flüssigkeit bei einer Rotation des Elements (10) mit einer hinreichend hohen ersten Drehzahl in ihr verbleibt und mit der Staukammer (38) ein Auslaufkanal (40) in Verbindung steht, der so geführt und angeordnet ist, daß mindestens ein Teil davon radial näher zur Rotationsachse (R) als die Flüssigkeitsoberfläche (80) während der Rotation mit der ersten Drehzahl liegt, dadurch gekennzeichnet, daß die Wände des Auslaufkanals aus einem von der Flüssigkeit benetzbaren Material bestehen und sein Querschnitt so eng gestaltet ist, daß die Flüssigkeit bei einer zweiten Drehzahl, die kleiner ist als die erste Drehzahl, durch Grenzflächenkraft getrieben in den Auslaufkanal (40) eindrigt.

2. Vorrichtung nach Anspruch 1, dadurch gekennzeichnet, daß der Auslaufkanal (40) an einer solchen Stelle (bei 66) in den Stauraum mündet, daß er schon während der Rotation mit der ersten Drehzahl von der Flüssigkeit benetzt wird und mindestens der erste Abschnitt (72) des Auslaufkanals mit einer Komponente in Richtung auf die Rotationsachse (R) verläuft.

3. Vorrichtung nach einem der Ansprüche 1 oder 2, dadurch gekennzeichnet, daß der Auslaufkanal (40) in einem mit einer kapillaraktiven Gestaltung oder Füllung versehenen Raum (41) mündet.

4. Vorrichtung nach einem der Ansprüche 1 bis 3, dadurch gekennzeichnet, daß der Auslaufkanal (40) so verläuft, daß er radial einwärts von der während der Rotation mit der ersten Drehzahl in der Staukammer (38) sich ausbildenden Flüssigkeitsoberfläche (80) einen Scheitelpunkt (76) hat, wobei er in einem ersten Abschnitt (72) bis zu dem Scheitelpunkt (76) mit einer Richtungskomponente auf die Rotationsachse (R) zu und in einem zweiten Abschnitt (73) ab dem Scheitelpunkt (76) mit einer Richtungskomponente radial von der Rotationsachse (R) weg verläuft.

5. Vorrichtung nach Anspruch 4, dadurch gekennzeichent, daß das Ende des Auslaufkanals (40) weiter weg von der Rotationsachse (R) liegt als der radial äußerste Teil (64) der Staukammer (38).

6. Vorrichtung nach einem der Ansprüche 1 bis 5, dadurch gekennzeichnet, daß die Staukammer (38) eine möglichst kleine benetzte Oberfläche hat.

7. Vorrichtung nach einem der Ansprüche 1 bis 6, dadurch gekennzeichnet, daß die Staukammer (38) in ihrer oberen Wand (79) einen Überlauf (78) hat, durch den bei der ersten Drehzahl ein einen bestimmten Grenzwert übersteigendes Flüssigkeitsvolumen abfließt.

8. Verfahren zum Steuern und Mischen eine der Zentrifugalkraft in einem um eine Achse rotierenden Element ausgesetzten Flüssigkeitsstromes in einer Vorrichtung nach einem der Ansprüche 1 bis 7, dadurch gekennzeichnet, daß man die Flüssigkeit mit einer Drehzahl mit Hilfe der Zentrifugalkraft in die Staukammer treibt, während der gewünschten Aufenthaltsdauer in der Staukammer eine Drehzahl aufrecht erhält, die in einer Zentrifugalbeschleunigung resultiert, die größer ist als die Gravitationsbeschleunigung, und nach Ablauf der gewünschten Aufenthaltsdauer in der Staukammer die Drehzahl so weit senkt, daß die Flüssigkeit den mit der Staukammer verbundenen Auslaufkanal durch Grenzflächenkraft getrieben füllt.

9. Verfahren nach Anspruch 8 zum Betreiben einer Vorrichtung nach Anspruch 5, dadurch gekennzeichnet, daß man nach Füllung des Auslaufkanals die Drehzahl wieder so weit erhöht, daß die Flüssigkeit durch die Zentrifugalkraft aus dem Auslaufkanal ausgetrieben wird.

**Claims**

1. Device for the control and mixing of a fluid current subjected to the influence of the centrifugal force in an element rotating about an axis, especially the rotor (10) of a centrifugal analyser, whereby the amount of fluid to be controlled moves in a flow canal and has a limited volume, whereby, in a flow canal (22, 32-36, 48) for the fluid there is provided at least one baffle chamber (38), the volume of which is greater than the maximum fluid volume and is so shaped that the fluid, in the case of a rotation of the element (10) with a sufficiently high first speed of rotation, remains in it and an outlet canal (40) is in connection with the baffle chamber (38), which canal is so constructed and arranged that at least a part thereof lies radially closer to the axis of rotation (R) than the fluid surface (80) during the rotation with the first speed of rotation, characterised in that the walls of the outlet canal consist of a material wettable by the fluid and its cross-section is made so narrow that the fluid, in the case of a second speed of rotation, which is smaller than the first speed of rotation, is driven by boundary surface force into the outlet canal (40).

2. Device according to claim 1, characterised in that he outlet canal (40) opens at such a place (at 66) in the baffle chamber that, already during the rotation with the first speed of rotation, it is wetted by the fluid and at least the first section (72) of the outlet canal runs with a component in the direction of the axis of rotation (R).

3. Device according to one of claims 1 or 2, characterised in that the outlet canal (40) opens into a chamber (41) provided with a capillary-active construction or filling.

4. Device according to one of claims 1 to 3, characterised in that the outlet canal (40) so runs that it has an apex (76) radially inwards from the fluid surface (80) formed in the baffle chamber (38) during the rotation with the first speed of rotation, whereby, in a first section (72), it runs up to the apex (76) with a directional component to the axis of rotation (R) and, in a second section (73), runs away from the apex (76) with a directional component radially from the axis of rotation (R).

5. Device according to claim 4, characterised in that the end of the outlet canal (40) lies further away from the axis of rotation (R) than the radially outermost part (64) of the baffle chamber (38).

6. Device according to one of claims 1 to 5, characterised in that the baffle chamber (38) has the smallest possible wetted surface.

7. Device according to one of claims 1 to 6, characterised in that the baffle chamber (38) has, in its upper wall (79), an overflow (78) through which, in the case of the first speed of rotation, a volume of fluid exceeding a definite limiting value runs off.

8. Process for the control and mixing of a current of fluid subjected to centrifugal force in an element rotating about an axis in a device according to one of claims 1 to 7, characterised in that one drives the fluid with a speed of rotation with the help of the centrifugal acceleration into the baffle chamber, during the desired period of residence in the baffle chamber maintains a speed of rotation which results in a centrifugal acceleration which is greater than the gravitational acceleration and, after expiry of the desired period of residence in the baffle chamber, reduces the speed of rotation to such an extent that the fluid, driven by boundary surface force, fills the outlet canal connected with the baffle chamber.

9. Process according to claim 8 for the operation of a device according to claim 5, characterised in that, after filling of the outlet canal, one again increases the speed of rotation to such an extent that the fluid is forced by the centrifugal force out of the outlet canal.

**Revendications**

1. Dispositif pour contrôler et mélanger un liquide exposé à une force centrifuge dans un élément tournant autour d'un axe, notamment dans le rotor (10) d'un analyseur centrifuge, la quantité de liquide à contrôler se déplaçant dans un conduit d'écoulement et ayant un volume limité, le canal d'écoulement (22, 32-36, 48) comportant, pour le liquide, au moins une chambre d'accumulation (38) dont la contenance est plus grande que le volume maximal du liquide et qui a une forme telle que, lorsque l'élément (10) tourne à une première vitesse assez élevée, le liquide reste dans cette chambre et que la chambre d'accumulation (38) communique avec un conduit de sortie (40) qui est orienté et disposé de telle manière qu'une partie au moins de ce tube se trouve, dans le sens radial, plus près de l'axe de rotation (R) que la surface du liquide (80) pendant que la rotation s'effectue à la première vitesse, caractérisé en ce que les parois du conduit de sortie sont constituées par un matériau susceptible d'être mouillé par le liquide et que la section du conduit est assez étroite pour que, lorsque le rotor tourne à une deuxième vitesse, inférieure à la première vitesse, le liquide, sous l'action de la tension superficielle, pénètre dans le conduit de sortie (40).

2. Dispositif selon la revendication 1, caractérisé en ce que le canal de sortie (40) débouche dans la cavité d'accumulation à un emplacement tel (en 66) que pendant la rotation à la première vitesse il est déjà mouillé par le liquide et que le premier segment (72) au moins du conduit de sortie est orienté, par une composante, dans la direction de l'axe de rotation (R).

3. Dispositif selon l'une des revendications 1 ou 2, caractérisé en ce que le conduit de sortie (40) débouche dans un espace (41) présentant une structure ou un mode de remplissage faisant intervenir la capillarité.

4. Dispositif selon l'une des revendications 1 à 3, caractérisé en ce que le conduit de sortie (40) a un trajet tel que, vers l'intérieur, dans le sens radial par rapport à la surface de liquide (80) qui se forme dans la chambre d'accumulation (38) pendant la rotation à la première vitesse, il comporte un sommet (76), le conduit allant, dans un premier segment (72) jusqu'au sommet (76) avec une composante de direction orientée vers l'axe de rotation (R) et, dans un deuxième segment (73) s'écartant du sommet (76) avec une composante de direction s'écartant dans le sens radial de l'axe de rotation (R).

5. Dispositif selon la revendication 4, caractérisé en ce que l'extrémité du conduit de sortie (40) est plus éloignée de l'axe de rotation (R) que la partie (64) de la chambre d'accumulation (38) qui est située le plus loin dans le sens radial.

6. Dispositif selon l'une des revendications 1 à 5, caractérisé en ce que la chambre d'accumulation (38) présente une surface mouillée aussi réduite que possible.

7. Dispositif selon l'une des revendications 1 à 6, caractérisé en ce que la chambre d'accumulation (38) comporte, dans sa paroi supérieure (79), un trop-plein (78) par lequel, lors de la rotation à la première vitesse, du liquide s'écoule lorsque le volume dépasse une valeur limite déterminée.

8. Procédé pour contrôler et mélanger un liquide exposé à une force centrifuge dans un élément tournant autour d'un axe dans un dispositif selon l'une des revendications 1 à 7, caractérisé en ce que l'on fait entrer le liquide, avec une certaine vitesse de rotation à l'aide de la force centrifuge, dans la chambre d'accumulation, que, pendant la durée de maintien voulue dans la chambre d'accumulation, on entretient une accélération de rotation supérieure à l'accélération de la pesanteur et qu'au bout de la durée de maintien voulue dans la chambre d'accumulation la vitesse de rotation s'abaisse au point que, sous l'action de la tension superficielle, le liquide remplit le conduit de sortie qui communique avec la chambre d'accumulation.

9. Procédé selon la revendication 8 pour la mise en œuvre d'un dispositif selon la revendication 5, caractérisé en ce qu'après le remplissage du conduit de sortie on augmente de nouveau la vitesse de rotation jusqu'à ce que le liquide soit expulsé du conduit de sortie sous l'action de la force centrifuge.

FIG. 1

FIG. 3

FIG. 4

FIG. 2a

FIG. 2b

0 073 512

1000
rpm
50

Drehzahlverlauf

78

36   38   64   FIG. 5a
     80   66   41
     76
     40

78
38   64   FIG.5b
80        41
     66
76
40

78
38   64   FIG.5c
80   66   41
40

78
38   64   FIG.5d
36   76   66   41
40

0 073 512